# NEUE EUROPÄISCHE PATENTSCHRIFT

(11) **EP 2 823 870 B2**
(45) Veröffentlichungstag und Bekanntmachung des Hinweises auf die Entscheidung über den Einspruch: **17.06.2020**
(45) Hinweis auf die Patenterteilung: 04.01.2017
(21) Anmeldenummer: 14171402.2
(22) Anmeldetag: 01.08.2009
(51) Int. Cl.: B01D 45/08

(54) **Partikel-Abscheidevorrichtung für eine Aerosol-Strömung**
Particle separation device for an aerosol flow
Dispositif de séparation de particules pour un flux aérosol

(30) Priorität: 11.08.2008 DE 202008011001 U; 01.10.2008 DE 102008050038; 01.10.2008 DE 102008050039
(43) Veröffentlichungstag der Anmeldung: 14.01.2015
(62) Teilanmeldung aus: 12152181.9
(73) Patentinhaber: ElringKlinger AG, 72581 Dettingen (DE)
(72) Erfinder: Gruhler, Tobias, 72793 Pfullingen (DE); Gorbach, Gabriele, Dr., 72766 Reutlingen (DE); Bendl, Klaus, 75038 Oberderdingen (DE); Haas, Thomas, 72581 Dettingen (DE)
(74) Vertreter: Hoeger, Stellrecht & Partner Patentanwälte mbB

(56) Entgegenhaltungen:
- EP-A1- 1 068 890
- WO-A1-02/21104
- WO-A1-02/21104
- WO-A1-2007/028351

## Beschreibung

Die Erfindung betrifft eine Abscheidevorrichtung zum Abscheiden von Flüssigkeits- und/oder Feststoff-Partikeln aus einer Aerosol-Strömung, welche einen Impaktor aufweist, der eine vom Aerosol anzuströmende Lochplatte und eine ungefähr parallel zu letzterer verlaufende, in Anströmrichtung der Lochplatte im Abstand hinter dieser angeordnete Prallfläche besitzt, welche eine der Lochplatte zugekehrte Abscheideschicht mit einer offenen Struktur aufweist. Bei der von der Erfindung betroffenen Abscheidevorrichtung wird die Prallfläche insbesondere von einer Prallplatte gebildet, an deren der Lochplatte zugekehrter Seite die Abscheideschicht vorgesehen ist.

Da es sich bei einer Aerosol-Strömung um eine Gasströmung handelt, welche die Flüssigkeits- und/oder Feststoffpartikel mit sich führt, wird im Folgenden teilweise von einer Gasströmung die Rede sein, und unter diesem Begriff ist dann sowohl die noch nicht gereinigte, als auch die teilweise gereinigte sowie die vollständig gereinigte Gasströmung zu verstehen.

Insbesondere betrifft die Erfindung eine solche Abscheidevorrichtung zum Abscheiden feiner und feinster Flüssigkeitströpfchen aus einer Gasströmung, und ein besonders wichtiger Anwendungsbereich der Erfindung ist eine solche Abscheidevorrichtung zum Abscheiden von Motoröl-Tröpfchen aus Blow-by-Gasen, welche aus dem Kurbelgehäuse eines Hubkolben-Verbrennungsmotors in dessen Verbrennungsräume zurückgeführt werden.

Deshalb wird die Erfindung im Folgenden anhand bevorzugter Ausführungsformen der Erfindung erläutert werden, bei denen es sich um Ölnebel-Abscheidevorrichtungen handelt, welche insbesondere in eine Ventilhaube des Motors integriert sind.

Im Betrieb eines Hubkolben-Verbrennungsmotors lässt es sich nicht vermeiden, dass von den Zylindern Gase, welche einen Nebel von feinsten Motoröl-Tröpfchen mit sich führen, in den die Kurbelwelle aufnehmenden Raum gelangen und aus diesem abgeleitet werden müssen. Aus Gründen des Umweltschutzes werden diese sogenannten Blow-by-Gase über den Ansaugtrakt des Motors in dessen Verbrennungsräume zurückgeführt, nachdem der Ölnebel aus dem Gasstrom abgeschieden wurde.

Eine diesem Zweck dienende Ölnebel-Abscheideeinrichtung ergibt sich aus der WO 2007/137916-A. Bei dieser bekannten Konstruktion ist die in einem Zylinderkopf des Motors drehbar gelagerte Nockenwelle als Hohlwelle ausgebildet, und die mit dem Ölnebel beladenen Blow-by-Gase werden zunächst in den Hohlraum der Nockenwelle eingeleitet, welche eine erste Stufe der Ölnebel-Abscheideeinrichtung bildet; sodann gelangen die von einem Teil des Motoröls befreiten Blow-by-Gase in einen Ölnebel-Nachabscheider, welcher eine zweite Stufe der Ölnebel-Abscheideeinrichtung bildet und an einer Seitenwand des Zylinderkopfs stationär angebracht ist. Dieser Ölnebel-Nachabscheider, bei dem es sich um eine Abscheidevorrichtung der eingangs erwähnten Art handelt, besitzt ein im Wesentlichen quaderförmiges, hochkantstehendes Gehäuse, welches eine Kammer umschließt, die durch eine schräg (nahezu diagonal) verlaufende Trennwand in einen Einlasskammerbereich und einen Auslasskammerbereich unterteilt wird. Die zu reinigenden Blow-by-Gase (im Folgenden als Rohgas bezeichnet) werden oben in den Einlasskammerbereich eingeleitet, und zwar mit einer Strömungsrichtung ungefähr parallel zu der von der Trennwand definierten Ebene. Ungefähr die obere Hälfte der Trennwand ist mit Löchern für den Durchtritt des Rohgases versehen, und die durch diese Löcher erzeugten Rohgasstrahlen treffen dann auf eine Prallwand, welche parallel zur Trennwand verläuft, im Abstand von dieser angeordnet ist, von oben in den Auslasskammerbereich hineinragt sowie in einem erheblichen Abstand von einem vom Gehäuse gebildeten Kammerboden endet. Die Anströmseite der Prallwand ist mit einem Vlies belegt. Auf der Abströmseite der Trennwand werden durch die mit dem Vlies versehene Prallwand Öltröpfchen aus dem Rohgas abgeschieden und tropfen auf den Kammerboden, welcher im Auslasskammerbereich mit einer Ölablauföffnung versehen ist. Das auf diese Weise mindestens zum Teil vom Ölnebel befreite Rohgas (im Folgenden als Reingas bezeichnet) strömt oben aus dem Auslasskammerbereich ab, und zwar durch einen oben am Gehäuse angeordneten, stutzenartigen und in vertikaler Richtung orientierten Reingasauslass. Im Einlasskammerbereich ist der Kammer- bzw. Gehäuseboden nicht mit einer Ölablauföffnung versehen, obwohl aus dem auf die Anströmseite der Trennwand auftreffenden Rohgas unvermeidlich gleichfalls Öltröpfchen abgeschieden werden, wenn auch in geringem Umfang. Das durch die Löcher der Trennwand in den Auslasskammerbereich mit verhältnismäßig hoher Strömungsgeschwindigkeit eingeströmte Rohgas wird durch die Prallwand nach unten in Richtung auf den Gehäuseboden umgelenkt und strömt dann nach nochmaliger Umlenkung zum Reingasauslass.

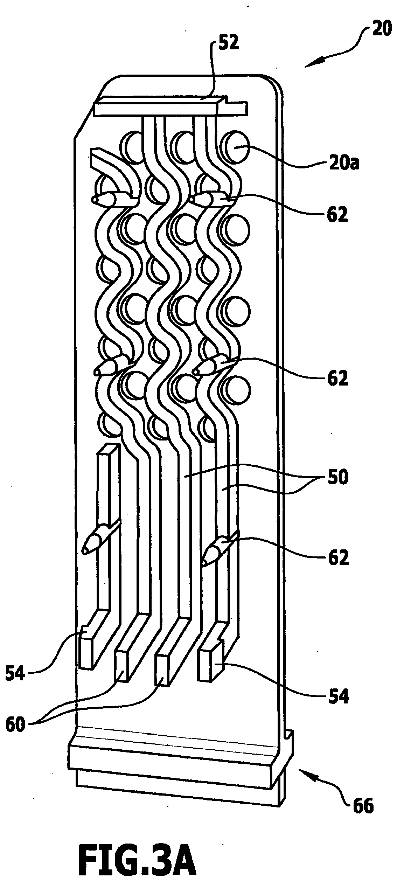

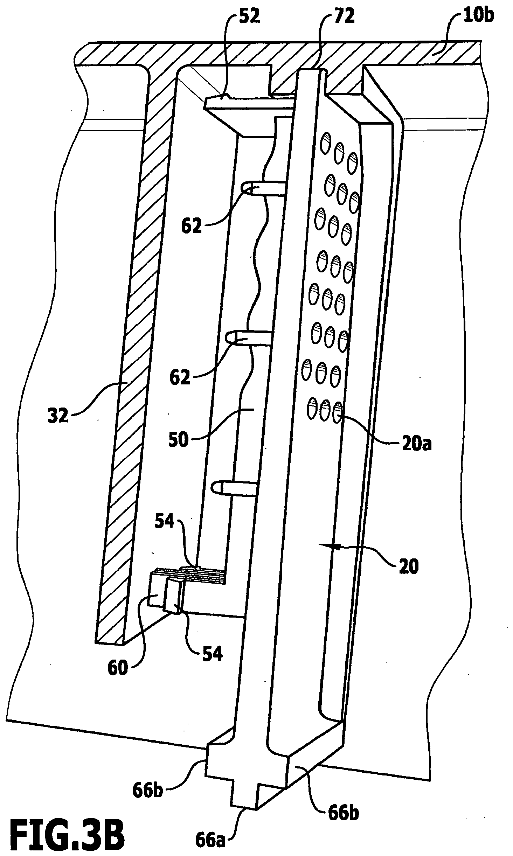

Bei dieser bekannten, den Ölnebel-Nachabscheider bildenden Abscheidevorrichtung ist die der mit Löchern versehenen Trennwand nachgeordnete Prallwand an die obere Gehäusewand angeformt, während die Trennwand als separat hergestelltes Teil gestaltet und durch nicht offenbarte Mittel im Gehäuse gehalten zu sein scheint (siehe Fig. 3). Da die WO 2007/137916-A keine Haltemittel für das an der Prallwand angebrachte Vlies offenbart, muss aus der Figur 3 geschlossen werden, dass dieses Vlies auf die Prallwand aufgeklebt ist. Aus allen diesen Gründen ist die Herstellung dieser bekannten Abscheidevorrichtung verhältnismäßig aufwendig und kostenintensiv, und außerdem scheint es ausgeschlossen, das Vlies mit vertretbarem Aufwand auszutauschen bzw. zu erneuern, sollte es sich im Betrieb durch zurückgehaltene Verunreinigungen zugesetzt oder dadurch in seiner für den Betrieb erforderlichen Struktur verändert haben, dass die durch die Löcher der Trennwand erzeugten Gasstrahlen mit verhältnismäßig großer Geschwindigkeit auf das Vlies auftreffen.

Bei dieser bekannten, den Ölnebel-Nachabscheider bildenden Abscheidevorrichtung weist die der mit Löchern versehenen Trennwand nachgeordnete und mit dem Vlies belegte Prallwand einen erheblichen Abstand von der gelochten Trennwand auf, was sich je nach Größe dieses Abstands nachteilig auf den Abscheideeffekt auswirken kann; in diesem Zusammenhang ist auch zu beachten, dass sich insbesondere bei Verwendung eines Faservlieses als Abscheideschicht im Betrieb der Abstand der Abscheideschicht von der gelochten Trennwand verändern kann, und zwar in Abhängigkeit von der momentanen Strömungsgeschwindigkeit der auf die Abscheideschicht auftreffenden Gasstrahlen. Im Betrieb der Abscheidevorrichtung kann sich je nach Material der Abscheideschicht auch deren Dicke unter Umständen verändern, z.B. aufgrund von Temperatureinflüssen, vor allem aber bei Verwendung eines Faservlieses für die Abscheideschicht, und zwar unter anderem aufgrund der in den Gasstrahlen auftretenden heftigen Turbulenzen beim Auftreffen der Gasstrahlen auf die Abscheideschicht.

Ein weiterer Ölnebelabscheider ist in der WO 2007/028351 offenbart, wobei Prallwand, Abscheideschicht und Lochplatte hier zylindrisch und konzentrisch ausgebildet sind.

Der Erfindung lag die Aufgabe zugrunde, eine Abscheidevorrichtung der eingangs definierten Art vorzuschlagen, welche im Betrieb eine zumindest nahezu konstant gute Abscheidewirkung hat.
Erfindungsgemäß wird diese Aufgabe mit einer Abscheidevorrichtung gemäß Anspruch 1 gelöst.

Erfindungsgemäß ist die Lochplatte auf ihrer der Prallfläche bzw. Prallplatte zugewandten Seite mit mehreren, gegen den von der Aerosol-Strömung angeströmten Bereich der der Lochplatte zugewandten Seite der Abscheideschicht anliegenden Abstandshalteelementen versehen, wobei die in der Anströmrichtung gemessene Höhe der Abstandshalteelemente, die von den letzteren für die Abscheideschicht gebildeten Auflageflächen sowie die Anzahl und Anordnung der Abstandshalteelemente in Abhängigkeit vom Material der Abscheideschicht so gewählt sind, dass auch im Betrieb der Abscheidevorrichtung ein Freibleiben der Löcher der Lochplatte von Material der Abscheideschicht gewährleistet ist, und zwar eben auch dann, wenn die Abscheideschicht der noch nicht in Betrieb genommenen Abscheidevorrichtung einen für die Erzielung eines guten Abscheideeffekts günstigen geringen Abstand von der Lochplatte hat.

Bei einer erfindungsgemäßen Abscheidevorrichtung lässt sich die Prallfläche bzw. Prallplatte in einem für den Abscheideeffekt optimalen geringen Abstand von der Lochplatte anordnen, ohne dass die Gefahr besteht - und zwar auch nicht bei Verwendung eines Faservlieses für die Abscheideschicht -, dass die Erzeugung von für den Abscheideeffekt wesentlichen Gasstrahlen durch die Lochplatte dadurch beeinträchtigt wird, dass die Abscheideschicht den Löchern der Lochplatte - und sei es im Laufe des Betriebs der Abscheidevorrichtung - zu nahe kommt oder gar Material der Abscheideschicht in diese Löcher hineinragt. Durch die Anzahl und/oder die räumliche Anordnung und/oder die Dimensionierung der Abstandshalteelemente (in Richtung senkrecht zur Lochplatte) lässt sich der gewünschte Abstand zwischen dem Material der Abscheideschicht und den Löchern der Lochplatte definieren und dauerhaft einhalten.

Unter einer offenen Struktur der Abscheideschicht ist jede Struktur der Abscheideschicht an ihrer der Lochplatte zugekehrten und im Betrieb der Abscheidevorrichtung von den Gasstrahlen angeströmten Seite zu verstehen, welche zu einer rauen, zerklüfteten oder porösen Oberfläche der Abscheideschicht führt, durch welche verhindert wird, dass die vom Aerosol mitgeführten Partikel von der durch die Prallplatte umgelenkten Gasströmung größtenteils so mitgerissen werden, dass sie in der Gasströmung dispergiert sind; außerdem hat die offene Struktur der Abscheideschicht bei von Flüssigkeitströpfchen gebildeten Partikeln auch einen gewissen Koaleszenzeffekt zur Folge, aufgrund dessen feine und feinste Tröpfchen zu größeren Tröpfchen koaleszieren, wodurch der Abscheideeffekt verbessert wird.

Die Prallfläche bzw. Prallplatte der erfindungsgemäßen Abscheidevorrichtung könnte zwar für die Gasströmung in geringem Umfang gasdurchlässig sein, bevorzugt werden jedoch Ausführungsformen, bei denen die Prallplatte bzw. Prallfläche in Anströmrichtung der Aerosol-Strömung mindestens in ihrem in dieser Richtung hinter dem abscheidewirksamen Bereich der Abscheideschicht liegenden Bereich gasundurchlässig oder zumindest im Wesentlichen gasundurchlässig ist, d.h. bei bevorzugten Ausführungsformen der erfindungsgemäßen Abscheidevorrichtung wird die der Lochplatte nachgeordnete Prallplatte von der Gasströmung nicht durchströmt; vielmehr werden auch noch an der mit der Abscheideschicht versehenen Prallfläche bzw. Prallplatte Partikel aus der Aerosol-Strömung abgeschieden, wobei im Falle von abgeschiedenen Flüssigkeitströpfchen diese von der Prallfläche bzw. Prallplatte und der Abscheideschicht abtropfen, ein Vorgang, welcher noch dadurch gefördert wird, dass die aus der Lochplatte austretenden Gasstrahlen von der Prallfläche bzw. Prallplatte so umgelenkt werden, dass sie nach der Umlenkung mehr oder minder parallel zur Prallfläche nach unten verlaufen.

Aus der US-A-4,627,406 ergibt sich eine Ölnebel-Abscheideeinrichtung mit einem Gehäuse, in welchem in Einströmrichtung der Blow-by-Gase hintereinander Lochplatten und von der Gasströmung gleichfalls durchströmte formstabile Filterplatten, z.B. poröse metallische Filterplatten, angeordnet sind. Die Loch- und Filterplatten greifen mit Plattenrändern in am Gehäuse vorgesehene Nuten ein und werden dadurch bei einigen Ausführungsformen in vorgegebenen Abständen voneinander gehalten, während bei anderen Ausführungsformen eine Lochplatte und eine dieser zugeordnete Filterplatte flächig gegeneinander anliegen. Bei einer Ausführungsform, bei der eine Lochplatte und eine dieser zugeordnete Filterplatte im Abstand voneinander verlaufen, ist die Lochplatte im Bereich ihrer Ecken mit in Richtung auf die zugeordnete Filterplatte vorspringenden Abstützelementen versehen, welche gegen die entsprechenden Eckbereiche der Filterplatte flächig anliegen, wobei diese Eckbereiche von den Seitenwänden der für dieses Plattenpaar am Gehäuse vorgesehenen Nuten abgedeckt und infolgedessen von der Aerosol-Strömung gar nicht angeströmt werden. Dies steht im Gegensatz zu dem Merkmal der erfindungsgemäßen Abscheidevorrichtung, wonach die Abstandshalteelemente mehr oder minder gleichförmig über den von der Aerosol-Strömung angeströmten Bereich der Abscheideschicht verteilt sind. Außerdem wird im Hinblick auf im Folgenden noch zu erläuternde Merkmale bevorzugter Ausführungsformen der erfindungsgemäßen Abscheidevorrichtung darauf hingewiesen, dass bei der sich aus der US-A-4,627,406 ergebenden Ölnebel-Abscheideeinrichtung, und zwar bei allen ihren Ausführungsformen, die Lochplatten und die Filterplatten als separate Elemente in das Gehäuse eingebaut werden, d.h. eine Lochplatte und eine Filterplatte sind nie miteinander zu einer als Einheit in das Gehäuse einbaubaren Baugruppe verbunden.

Bei bevorzugten Ausführungsformen der erfindungsgemäßen Abscheidevorrichtung besteht die Abscheideschicht aus einem solchen Material, dass sie quer zur Prallfläche bzw. Prallplatte kompressibel und insbesondere elastisch, d.h. dickenelastisch ist. In Verbindung mit den erfindungsgemäß vorgesehenen Abstandshalteelementen bringt dies die folgenden Vorteile mit sich:
Die Abscheideschicht kann hinsichtlich ihrer Dicke mit verhältnismäßig großen Toleranzen hergestellt werden, da sie beim Einbau zwischen die Lochplatte und die Prallplatte durch die Abstandshalteelemente der Lochplatte in ihrer Dicke reduziert werden kann (die anfängliche Dicke der Abscheideschicht darf nur nicht geringer sein als der Abstand der Abstandshalteelemente der Lochplatte von der Prallplatte), und die Abscheideschicht kann sich im Betrieb der Abscheidevorrichtung auch etwas setzen (d.h. ihre Dicke im nichtgepressten Zustand kann dann etwas geringer sein als im Neuzustand der Abscheideschicht), ohne dass der von den Abstandshalteelementen der Lochplatte vorgegebene Abstand der Abscheideschicht von der Lochplatte größer wird als dies ein optimaler Abscheideeffekt erfordert.

Beim Material der Abscheideschicht kann es sich z.B. um einen geschäumten, offenporigen und insbesondere elastischen Kunststoff handeln, grundsätzlich aber auch z.B. um ein poröses, an seiner Oberfläche offenporiges keramisches oder metallisches Material, auch wenn dies nicht bevorzugt wird. Besonders vorteilhaft ist es, wenn die Abscheideschicht an ihrer angeströmten Seite ein Faservlies aufweist oder insgesamt aus einem Faservlies besteht, und zwar insbesondere aus gegenüber Motoröl und Blow-by-Gasen chemisch beständigen Kunststofffasern.

Bei bevorzugten Ausführungsformen der erfindungsgemäßen Abscheidevorrichtung ist mindestens ein Abstandshalteelement als von der Lochplatte abstehender Stift, Dorn oder Steg ausgebildet, wobei Stege oder Rippen bevorzugt werden, welche sich über die ganze Länge oder Breite zumindest des angeströmten Bereichs der Abscheideschicht erstrecken.
Erfindungsgemäß ist die Lochplatte auf ihrer der Prallfläche bzw. Prallplatte zugewandten Seite mit Abstandshalteelemente bildenden Rippen versehen, zwischen welchen Löcher der Lochplatte angeordnet sind, wobei die Rippen zwischen den Löchern vorzugsweise wellenförmig ausgebildet werden, wenn die Lochplatte mit möglichst vielen Löchern und mit möglichst vielen und langen Rippen versehen werden soll, um möglichst alle Bereiche der Abscheideschicht mit den Rippen abstützen zu können. Die als Abstandshalteelemente wirkenden Rippen können alternativ oder zusätzlich aber auch die Wirkung haben, die Gasströmung und/oder die Bewegung der abgeschiedenen Partikel zu führen - wenn die abgeschiedenen Partikel geführt werden sollen, ist es vorteilhaft, wenn die Rippen im Betrieb der Abscheidevorrichtung ungefähr vertikal verlaufen oder mit der Vertikalen einen spitzen Winkel bilden.

Ferner sei bemerkt, dass sich die Rippen nicht unbedingt kontinuierlich über die ganze Lochplatte erstrecken müssen, sondern unterbrochen sein bzw. von kurzen Rippensegmenten gebildet werden können.

Damit sich die erfindungsgemäße Abscheidevorrichtung besonders kostengünstig herstellen sowie gegebenenfalls austauschen lässt, hat die Abscheideschicht bei bevorzugten Ausführungsformen die Gestalt einer als separates Teil hergestellten Auflage auf der Prallplatte.

Dadurch, dass sich durch die erfindungsgemäß vorzusehenden Abstandshalteelemente ein definierter Abstand zwischen der Lochplatte und der an der Prallplatte vorgesehenen Abscheideschicht einhalten lässt, kann die erfindungsgemäße Abscheidevorrichtung so gestaltet werden, dass die Abscheideschicht durch die Abstandshalteelemente in einem solchen Abstand von der Lochplatte gehalten wird, dass sich zwischen der Lochplatte und der Abscheideschicht Strömungspfade für die Gasströmung ergeben, welche ungefähr parallel zur Lochplatte verlaufen. Dann ergibt sich in der erfindungsgemäßen Abscheidevorrichtung ein definierter Bypass-Volumenstrom der Gasströmung zwischen der Lochplatte und der Abscheideschicht, was von Vorteil sein kann, wenn die Abscheideschicht infolge einer im Betrieb erfolgten Verschmutzung oder anderweitigen Veränderung mehr oder weniger gasundurchlässig geworden ist.

Im Sinne einer einfachen und kostengünstigen Herstellung sowie eines Austauschs der erfindungsgemäßen Abscheidevorrichtung ist es von Vorteil, die Abscheideschicht zwischen die Lochplatte und die Prallfläche bzw. Prallplatte nur einzulegen.

Um dann zu verhindern, dass sich die Abscheideschicht im Betrieb der Abscheidevorrichtung verschiebt, und zwar insbesondere in Durchströmrichtung der vorstehend erwähnten Strömungspfade, weist der Impaktor bevorzugter Ausführungsformen für die Abscheideschicht eine eine solche Verschiebung verhindernde Abstützung für einen Rand der Abscheideschicht auf, wobei die Abstützung in Durchströmrichtung der Strömungspfade vorteilhafterweise gasdurchlässig ist, um den erwähnten Bypass-Volumenstrom nicht zu behindern.

Bei nur eingelegter Abscheideschicht ist es von Vorteil, wenn zusätzlich zu der erwähnten Abstützung für die Abscheideschicht oder alternativ zu dieser Abstützung die Lochplatte und/oder die Prallfläche bzw. Prallplatte mit mindestens einem Fixierelement für die Abscheideschicht versehen ist. Derartige Fixierelemente können an die Platten im Zuge ihrer Herstellung einfach angeformt, insbesondere angespritzt werden und die Abscheideschicht muss dann nicht mit der Prallfläche bzw. Prallplatte verklebt werden. Das Fixierelement kann z.B. von einem an die betreffende Platte angeformten rahmenförmigen Steg gebildet werden, welcher gegebenenfalls Unterbrechungen aufweist, einfacher sind jedoch Ausführungsformen, bei denen das Fixierelement als ein von der Platte abstehender und in die Abscheideschicht eindringender Vorsprung gestaltet ist, wenn die Abscheideschicht ein Eindringen des Vorsprungs zulässt, so wie dies z.B. bei einem Schaumkunststoff oder einem Faservlies der Fall ist. Unter "Eindringen" ist dabei auch zu verstehen, dass der Vorsprung die ihm zugekehrte Oberfläche der Abscheideschicht nur verformt, d.h. in die Abscheideschicht eine Vertiefung eindrückt; wenn der Vorsprung jedoch als kurzer und insbesondere spitzer Stift oder Dorn gestaltet ist, kann er auch zwischen den Fasern eines Faservlieses hindurch in das Vliesinnere eindringen.

Damit sich die erfindungsgemäße Abscheidevorrichtung, gegebenenfalls auch ein die Abscheidevorrichtung aufnehmendes Gehäuse, besonders kostengünstig herstellen lässt, zeichnen sich bevorzugte Ausführungsformen der erfindungsgemäßen Abscheidevorrichtung dadurch aus, dass die Lochplatte und die Prallplatte als getrennt voneinander hergestellte Teile ausgebildet und über Verbindungsmittel miteinander zu einer als Einheit einbaubaren Baugruppe verbunden sind. Lochplatte und Prallplatte lassen sich dann mit einfach gestalteten Werkzeugen (z.B. Kunststoff-Spritzgusswerkzeugen) herstellen, sodann zu einer Baugruppe miteinander verbinden, nachdem die Abscheideschicht auf die Prallplatte aufgelegt wurde, und schließlich in ein Gehäuse, wie eine Ventilhaube, einbauen. Bei der Gestaltung von Lochplatte und Prallplatte ist man dann auch keinerlei herstellungsbedingten Beschränkungen unterworfen, wie sie bei der Abscheidevorrichtung gemäß der WO 2007/137916-A zu beachten sind. Bei bevorzugten Ausführungsformen der erfindungsgemäßen Abscheidevorrichtung sind die Verbindungsmittel als an den beiden Platten angeordnete Rastelemente gestaltet, damit Lochplatte und Prallplatte besonders einfach zu einer als Einheit handhabbaren Baugruppe miteinander verbunden werden können.

Grundsätzlich könnten Lochplatte und Prallplatte im eingebauten Zustand mehr oder minder horizontal verlaufen, so wie dies beispielsweise bei der Abscheidevorrichtung nach der JP-2000045750-A der Fall ist. Bevorzugt werden jedoch Ausführungsformen, bei denen die Baugruppe für einen solchen Einbau gestaltet ist, dass sich die Platten in vertikaler Richtung erstrecken oder mit der Vertikalen einen spitzen Winkel bilden, weil dann abgeschiedene Flüssigkeitströpfchen nach unten von der Prallplatte und der Abscheideschicht abtropfen und das Risiko vermindert wird, dass abgeschiedene Partikel von der Gasströmung in erheblichem Umfang wieder mitgerissen werden. In diesem Fall ist es dann auch vorteilhaft, wenn die Lochplatte die Prallplatte nach unten überragt, denn dann kann die durch die Prallplatte umgelenkte Gasströmung am unteren Rand der Prallplatte vorbei in einer Richtung von der erfindungsgemäßen Baugruppe abströmen, welche quer, d.h. ungefähr senkrecht zur Lochplatte bzw. Prallplatte verläuft.

Die Lochplatte und die Prallplatte könnten fest miteinander verbunden werden, z.B. durch Verkleben, Verschweißen oder dergleichen. Hinsichtlich der Montage der erfindungsgemäßen Baugruppe einfacher und kostengünstiger ist es jedoch, wenn die Lochplatte und die Prallplatte mittels Rastelementen miteinander verbunden sind, welche an den beiden Platten vorgesehen und so gestaltet sind, dass sie miteinander zusammenwirken, wenn die beiden Platten zusammengefügt werden.

Um Lochplatte und Prallplatte in der erfindungsgemäßen Baugruppe in einem für den Abscheideeffekt optimalen Abstand voneinander zu halten, und zwar schon vor dem Einbau der erfindungsgemäßen Baugruppe in ein Gehäuse oder dergleichen, werden Ausführungsformen der erfindungsgemäßen Abscheidevorrichtung empfohlen, bei denen an der Prallplatte und/oder an der Lochplatte mindestens ein mit der jeweils anderen Platte zusammenwirkendes, die beiden Platten im Abstand voneinander haltendes Distanzelement vorgesehen ist. Besonders einfach wird die Gestaltung der erfindungsgemäßen Abscheidevorrichtung in diesem Fall dann, wenn die der Verbindung von Lochplatte und Prallplatte miteinander dienenden Verbindungsmittel auch das mindestens eine Distanzelement bilden, was z.B. im Falle einer Rastverbindung ganz einfach zu bewerkstelligen ist.

Wenn bei eingebauter Abscheidevorrichtung Lochplatte und Prallplatte sich zumindest ungefähr in vertikaler Richtung erstrecken, und wenn aus Gründen der Stabilität der erfindungsgemäßen Baugruppe die Platten auch in ihren unteren Bereichen miteinander verbunden sein sollen, wird vorgeschlagen, die Verbindungsmittel so zu gestalten, dass die Gasströmung des Aerosols aus dem Zwischenraum zwischen Lochplatte und Prallplatte insbesondere nach unten ausströmen kann, z.B. dadurch, dass in den unteren Bereichen der beiden Platten vorgesehene Verbindungsmittel zwischen sich eine Lücke freilassen.

Wenn, wie dies bei bevorzugten Ausführungsformen der erfindungsgemäßen Abscheidevorrichtung der Fall ist, die Lochplatte und/oder die Prallplatte seitliche Führungs- und Halteränder zum Einschieben der Baugruppe in Führungen eines Gehäuseteils eines der Aufnahme der Abscheidevorrichtung dienenden Gehäuses aufweist, ist die Montage der erfindungsgemäßen Baugruppe an einem solchen Gehäuseteil besonders einfach, und da die beiden Platten der erfindungsgemäßen Baugruppe schon zuvor miteinander verbunden werden können, bedarf es nur noch des Einschiebens der einen der beiden Platten oder beider Platten in Führungen des besagten Gehäuseteils, um die erfindungsgemäße Baugruppe an diesem Gehäuseteil anzubringen. Wenn dann die Lochplatte noch einen oberen und gegebenenfalls auch noch einen unteren Halterand zum Eingreifen zwischen Halteelemente eines oder mehrerer Gehäuseteile aufweist, kann die Lochplatte eine die Abscheidevorrichtung aufnehmende Gehäusekammer in einen Einströmkammerbereich und einen Ausströmkammerbereich unterteilen, und zwar nahezu gasdicht, wenn Ränder der Lochplatte und mit diesen zusammenwirkende Gehäusebereiche zusammen Labyrinthdichtungen bilden. Ein oder mehrere Ränder der Lochplatte können aber auch mit einem oder mehreren Gehäuseteilen verklebt oder verschweißt sein.

Wegen der vorstehend erwähnten Labyrinthdichtungen ist es, wenn überhaupt erforderlich, ausreichend, die erfindungsgemäße Baugruppe lediglich längs eines Randes einer ihrer Platten und vorzugsweise längs des unteren Randes der Lochplatte mit einem Gehäuseteil eines der Aufnahme der Abscheidevorrichtung dienenden Gehäuses zu verbinden, und wenn die Verbindung eine Schweißverbindung ist, führt die montierte erfindungsgemäße Baugruppe zu dem Vorteil, dass die Schweißnaht dann in einer Ebene verlaufen kann und nicht abgestuft ist.

Ferner kann beim Zusammenbau der erfindungsgemäßen Baugruppe die richtige Lage der Abscheideschicht, insbesondere einer Faservlies-Abscheideschicht, besonders einfach sicher gestellt und überprüft werden.

Ein den Abstand der Prallplatte von der Lochplatte definierendes Distanzelement (oder mehrere solche Distanzelemente) kann ohne Weiteres so gestaltet werden, dass es auch die vorstehend erwähnte Abstützung (oder Auflage) für die Abscheideschicht bildet, so dass diese unter dem Einfluss der Gasströmung und/oder ihres Eigengewichts im Betrieb der Abscheidevorrichtung sich nicht nach unten bewegen kann.

Am einfachsten und kostengünstigsten lässt sich die erfindungsgemäße Abscheidevorrichtung dann herstellen, wenn es sich bei der Lochplatte und der Prallplatte um Kunststoff-Spritzgussteile handelt.

Besondere Bedeutung erlangt die erfindungsgemäße Abscheidevorrichtung in dem Fall, in dem sie in eine Ventilhaube für einen Hubkolben-Verbrennungsmotor integriert und als Ölnebel-Abscheidevorrichtung gestaltet ist.

Weitere Merkmale, Vorteile und Einzelheiten der Erfindung ergeben sich aus der nachfolgenden Beschreibung und der beigefügten zeichnerischen Darstellung einer besonders vorteilhaften Ausführungsform der erfindungsgemäßen Abscheidevorrichtung; in der Zeichnung zeigen:
- Figur 1: einen vertikalen Längsschnitt durch einen die erfindungsgemäße Abscheidevorrichtung beinhaltenden Bereich einer Ventilhaube für einen Hubkolben-Verbrennungsmotor;
- Figur 2: einen horizontalen Schnitt durch einen Teil dieses Ventilhaubenbereichs gemäß der Linie 2-2 in Figur 1;
- Figur 3A: die Lochplatte der Abscheidevorrichtung in einer isometrischen Darstellung, und zwar gemäß Figur 1 von links gesehen;
- Figur 3B: eine isometrische Darstellung der Lochplatte gemäß Figur 1 von vorn gesehen, und zwar samt einem die Lochplatte führenden und haltenden Bereich eines in Figur 1 dargestellten Oberteils der Ventilhaube;
- Figur 4: eine isometrische Darstellung der erfindungsgemäßen Baugruppe aus Lochplatte, Prallplatte und Abscheideschicht, und zwar nach Art einer Explosionszeichnung vor dem Zusammenfügen der Teile der Baugruppe, und
- Figur 5: eine isometrische Darstellung der vormontierten, d.h. zusammengefügten erfindungsgemäßen Baugruppe.

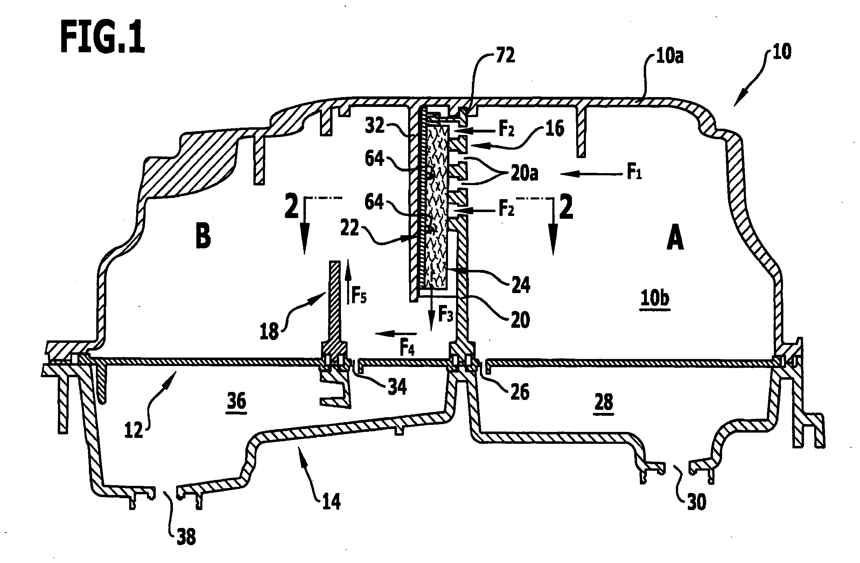

Die Figur 1 zeigt ein haubenartiges Oberteil 10, ein plattenartiges Zwischenteil 12 und ein schalenartiges Unterteil 14 einer Ventilhaube. Bei allen drei Teilen handelt es sich um Kunststoffteile aus einem Polyamid, welche nicht dargestellte Verstärkungsfasern enthalten sollen.

In die erfindungsgemäße Ventilhaube ist eine erfindungsgemäße Abscheidevorrichtung integriert, welche einen erfindungsgemäßen Impaktor 16 sowie eine diesem nachgeordnete zweite Prallplatte 18 umfasst. Das Oberteil 10 und das Zwischenteil 12 bilden zusammen eine Kammer, welche durch den Impaktor 16 in eine Einströmkammer A und eine Ausströmkammer B unterteilt wird.

Feine und feinste Motoröl-Tröpfchen mit sich führendes Blow-by-Gas (Aerosol) - im Folgenden als Rohgas bezeichnet - strömt durch eine nicht dargestellte Öffnung in die Einströmkammer A ein und durchströmt diese, wie durch den Pfeil F₁ angedeutet, im Wesentlichen in gemäß Figur 1 horizontaler Richtung von rechts nach links.

Der Impaktor 16 ist aus einer Lochplatte 20, einer ersten Prallplatte 22 und einer von dieser gehaltenen Abscheideschicht 24 zusammengesetzt, wobei es sich bei der Lochplatte 20 und der Prallplatte 22 um Kunststoff-Spritzgussteile, insbesondere aus einem Polyamid, handeln soll, während die Abscheideschicht 24 von einem Faservlies in Form eines flachen Quaders gebildet wird, wobei es sich bei den Fasern des Faservlieses um gegen Motoröl und Blow-by-Gase beständige Kunststoff-, Mineral- oder Metallfasern handeln soll. Die Einzelteile des Impaktors 16 werden im Folgenden noch näher erläutert werden; hier sei zunächst nur bemerkt, dass die Lochplatte 20 mit einer Vielzahl von Löchern 20a versehen ist, deren Durchmesser insbesondere ca. 2 mm beträgt.

Das zu behandelnde Rohgas trifft zunächst entsprechend dem Pfeil F₁ auf die gemäß Figur 1 rechte Seite der Lochplatte 20 auf, wobei, da die Lochplatte auch als Prallwand wirkt, ein erster Teil des Ölnebels aus dem Rohgas abgeschieden wird; die dabei an der gemäß Figur 1 rechten Seite der Lochplatte 20 gebildeten Öltröpfchen fließen an der Lochplatte 20 nach unten, das Öl gelangt dann auf das Zwischenteil 12 und fließt durch eine der Lochplatte 20 unmittelbar benachbarte Ölablauföffnung 26 des Zwischenteils 12 nach unten in eine in das Unterteil 14 eingeformte Ölsammelkammer 28, aus welcher das Öl über eine weitere Ölablauföffnung 30 abfließt (in der Praxis ist der Ölablauföffnung 30 ein nicht dargestelltes Ventil zugeordnet).

Durch die Löcher 20a der Lochplatte 20 werden aus der Rohgasströmung eine Vielzahl von Rohgas-Teilströmen mit verhältnismäßig hoher Strömungsgeschwindigkeit gebildet, welche gemäß den Pfeilen F₂ auf die Abscheideschicht 24 und je nach Gasdurchlässigkeit der letzteren auf die Prallplatte 22 auftreffen. Da die Prallplatte 22 gasundurchlässig ist und, wie im Folgenden noch gezeigt werden wird, mehr oder minder gasdicht an eine Decke 10a und Seitenwände 10b des Oberteils 10 anschließt, wird die Gasströmung vor der Prallplatte 22, d.h. auf der gemäß Figur 1 rechten Seite der Prallplatte 22, nach unten umgelenkt, so wie dies durch den Pfeil F₃ angedeutet wurde. Sodann wird die Gasströmung durch das Zwischenteil 12 erneut umgelenkt (siehe den Pfeil F₄), trifft auf die zweite Prallplatte 18 auf und wird durch diese nach oben umgelenkt (siehe den Pfeil F₅).

An das Oberteil 10 ist eine Stützwand 32 angeformt, die sich von oben in die Ausströmkammer B hineinerstreckt, den Impaktor 16 nach unten etwas überragt, jedoch in deutlichem Abstand vom Zwischenteil 12 über diesem endet; was die Figur 1 nicht erkennen lässt ist der Umstand, dass die Stützwand 32 nicht nur in die Decke 10a des Oberteils 10 übergeht, sondern auch in dessen beide Seitenwände 10b.

Durch die Abscheideschicht 24 und, je nach Gasdurchlässigkeit der letzteren, die Prallplatte 22 wird der größte Teil des vom Rohgas mitgeführten Ölnebels aus der Gasströmung abgeschieden; die dabei gebildeten Öltröpfchen tropfen von der Abscheideschicht 24, der Prallplatte 22 und der Stützwand 32 nach unten ab und gelangen gemäß Figur 1 links von einem nicht-perforierten unteren Bereich der Lochplatte 20 auf das Zwischenteil 12. Dieses ist unmittelbar vor, d.h. gemäß Figur 1 rechts von der Prallplatte 18 mit einer Ölablauföffnung 34 versehen, so dass das abgeschiedene Öl in eine in das Unterteil 14 eingeformte zweite Ölsammelkammer 36 abfließen kann. Letztere hat gleichfalls eine Ölablauföffnung 38 entsprechend der Ölablauföffnung 30.

In diesem Zusammenhang sei noch bemerkt, dass die Prallplatte 18 hauptsächlich den Zweck und die Funktion hat, zu verhindern, dass vom Impaktor 16 und der Stützwand 32 abtropfendes Öl von der Gasströmung wieder mitgerissen werden kann, sondern durch die Ölablauföffnung 34 in die Ölsammelkammer 36 abfließt.

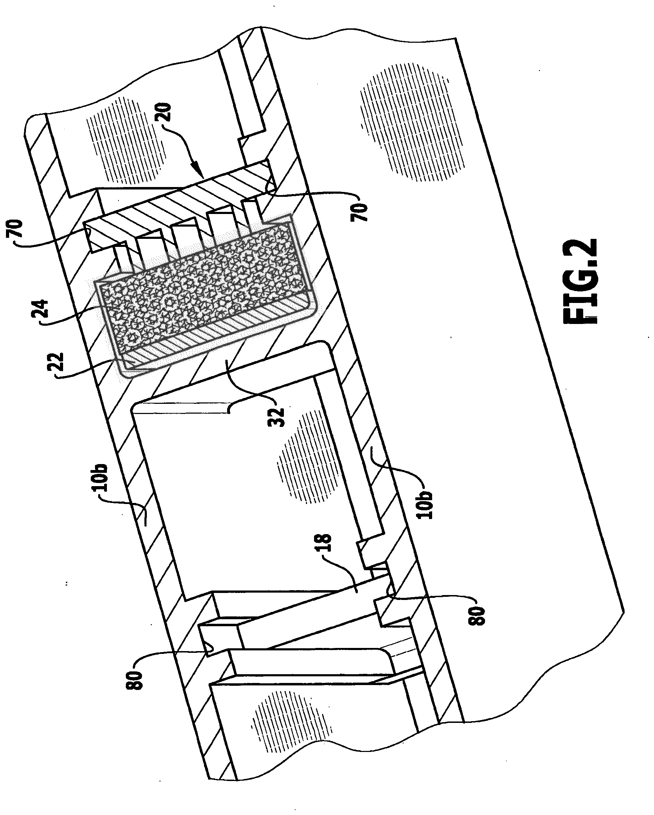

Das von mitgeführtem Motoröl zumindest weitgehend befreite Blow-by-Gas, nämlich das Reingas, verlässt die Ausströmkammer B über eine nicht dargestellte Öffnung im oberen oder gemäß Figur 1 linken Bereich des Oberteils 10. Der Vollständigkeit halber sei noch erwähnt, dass bei der für die erfindungsgemäße Abscheidevorrichtung bevorzugt verwendeten Ventilhaube das Oberteil 10, das Zwischenteil 12 und das Unterteil 14 miteinander verschweißt werden, und zwar vorzugsweise mit Hilfe des sogenannten Heißgas-Schweißens, welches folgende Vorgehensweise ermöglicht: Zunächst wird das Zwischenteil 12 auf das Unterteil 14 aufgelegt; die Querschnittskonturen, welche sich der Figur 1 entnehmen lassen, erlauben es sodann, in einem Schritt die miteinander zu verbindenden Fügeflächen zu verschweißen, nachdem im Bereich dieser Fügeflächen der Kunststoff mittels eines heißen Gases aufgeschmolzen wurde. Bei diesem Schweißvorgang werden die gegeneinander anliegenden Fügeflächen des Oberteils 10 und des Unterteils 14 sowie die gegeneinander anliegenden Fügeflächen des Oberteils 10 und des Zwischenteils 12 miteinander verbunden. Auch erlauben es die aus Figur 2 ersichtlichen Querschnittskonturen, die gegeneinander anliegenden Fügeflächen der Lochplatte 20 und der zweiten Prallplatte 18, des Unterteils 14 und des Zwischenteils 12 miteinander zu verschweißen.

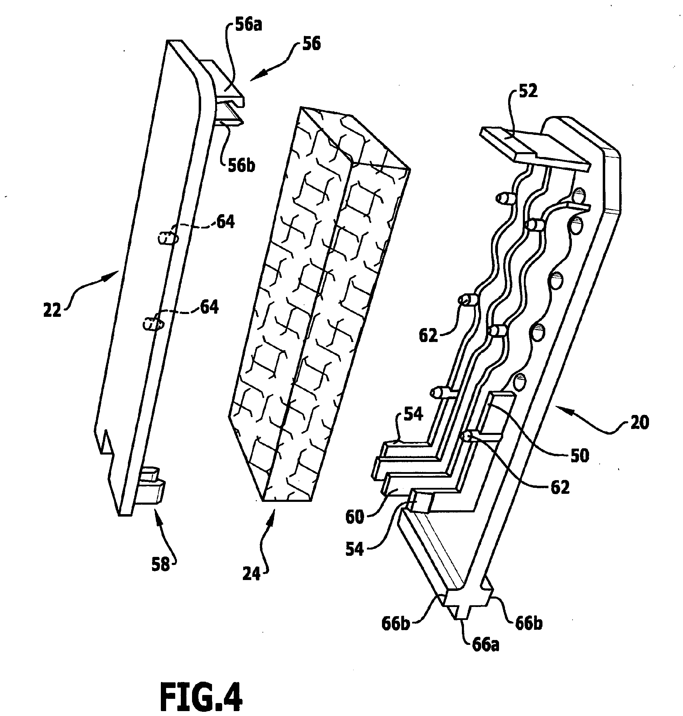

Zunächst sollen nun anhand der Figuren 3A, 3B und 4 die einzelnen Teile der erfindungsgemäßen Baugruppe der erfindungsgemäßen Abscheidevorrichtung erläutert werden.

Auf der in der vormontierten erfindungsgemäßen Baugruppe der Prallplatte 22 zugewandten Seite der Lochplatte 20 sind an diese rippenförmige Abstandshalteelemente 50 angeformt, welche in der vormontierten Baugruppe gegen die Abscheideschicht 24 anliegen und diese in einem definierten Abstand von den Löchern 20a der Lochplatte 20 halten. Wie besonders deutlich die Figur 3A erkennen lässt, haben die die Abstandshalteelemente 50 bildenden Rippen zwischen den Löchern 20a einen wellenförmigen Verlauf. Wie bereits erwähnt und wie die Figur 4 deutlich erkennen lässt, wird die Abscheideschicht 24 von einem Element in Form eines flachen Quaders gebildet, welches vorzugsweise aus einem Faservlies besteht. Bei der bevorzugten Ausführungsform der erfindungsgemäßen Baugruppe wird die Abscheideschicht 24 zwischen den Abstandshalteelementen 50 der Lochplatte 20 und der gemäß Figur 4 linken Seite der Prallplatte 22 gehalten, und zwar vorzugsweise so, dass in der vormontierten Baugruppe die Abscheideschicht 24 zwischen der Prallplatte 22 und den Abstandshalteelementen 50 leicht gepresst wird.

Um die Lochplatte 20 und die Prallplatte 22 leicht und einfach miteinander verbinden zu können, sind an die in der Baugruppe einander zugewandten Seiten der Lochplatte 20 und der Prallplatte 22 Verbindungselemente angeformt, welche erfindungsgemäß so gestaltet sind, dass sich die Verbindungselemente der einen Platte an den Verbindungselementen der anderen Platte verrasten lassen, wenn man die Abscheideschicht 24 auf die Prallplatte 22 auflegt und dann die Lochplatte 20 gegen die Abscheideschicht 24 und die Prallplatte 22 drückt. Zu diesem Zweck ist die Lochplatte 20 oben mit einem zungenförmigen Verbindungselement 52 und unten mit zwei zungenförmigen Verbindungselementen 54 versehen, welche von der gemäß Figur 4 rechten Seite der Lochplatte 20 abstehen, wobei bei der dargestellten bevorzugten Ausführungsform die Verbindungselemente 54 an jeweils eines der Abstandshalteelemente 50 angeformt sind. Die Verbindungselemente 54 bilden außerdem erfindungsgemäß eine Auflage für die Abscheideschicht 24, so dass sich diese nicht nach unten (gemäß Figur 4) bewegen kann. Außerdem bildet erfindungsgemäß auch das Verbindungselement 52 eine Anlage für die Abscheideschicht 24, so dass sich diese in der vormontierten Baugruppe auch nicht nach oben bewegen kann. An die Prallplatte 22 ist oben ein Verbindungselement 56 angeformt, welches von zwei quer verlaufenden Rippen 56a und 56b gebildet wird, die zwischen sich eine Nut bilden, in die sich das Verbindungselement 52 der Lochplatte 20 einschieben lässt. Zur Verrastung der Verbindungselemente 52 und 56 aneinander ist am vorderen freien Rand des Verbindungselements 52 an dieses ein Vorsprung angeformt, welcher gemäß Figur 4 nach oben über die Zunge des Verbindungselements 52 vorsteht, sich parallel zum oberen Rand der Lochplatte 20 erstreckt und einen ungefähr keilförmigen Querschnitt aufweist. Andererseits ist an die Unterseite der oberen Rippe 56a des Verbindungselements 56 der Prallplatte 22 ein Vorsprung angeformt, welcher von der Rippe 56a nach unten absteht, sich am freien vorderen Rand der Rippe 56a befindet und sich parallel zum oberen Rand der Prallplatte 22 erstreckt. Wird das Verbindungselement 52 der Lochplatte 20 zwischen die beiden Rippen 56a und 56b eingeschoben, verrastet das Verbindungselement 52 am Verbindungselement 56, indem der Vorsprung des Verbindungselements 52 den Vorsprung der Rippe 56a hintergreift. Zum Zusammenwirken mit den beiden Verbindungselementen 54 der

Lochplatte 20 sind an die gemäß Figur 4 linke Seite der Prallplatte 22 im Querabstand voneinander zwei Verbindungselemente 58 angeformt, von denen die Zeichnungen nur das gemäß Figur 4 vordere Verbindungselement erkennen lassen, welches mit dem gemäß Figur 3A linken Verbindungselement 54 der Lochplatte 20 zusammenwirken soll. Jedes der beiden Verbindungselemente 58 ist ungefähr so gestaltet wie das Verbindungselement 56 der Prallplatte 22, jedoch gegenüber dem Verbindungselement 56 um 90° gedreht angeordnet. Ebenso wie das Verbindungselement 52 weist auch jedes der beiden Verbindungselemente 54 an seinem vorderen Ende einen Vorsprung auf, welcher in der vormontierten erfindungsgemäßen Baugruppe einen Vorsprung des zugeordneten Verbindungselements 58 hintergreift.

Erfindungsgemäß bildet die von dem Oberteil 10 der Ventilhaube gehaltene Stützwand 32 auch ein Sicherungselement für den Zusammenhalt des Impaktors 16. Zu diesem Zweck liegt die Stützwand 32 gegen den montierten Impaktor 16 an, und zwar bei der bevorzugten Ausführungsform gegen die Prallplatte 22. Auf diese Weise wird sichergestellt, dass sich im Betrieb der Abscheidevorrichtung die den Impaktor 16 bildenden Teile, insbesondere die Lochplatte 20 und die Prallplatte 22, nicht voneinander lösen können.

Erfindungsgemäß dienen die Verbindungselemente 52, 54, 56 und 58 auch dazu, in der vormontierten Baugruppe die Lochplatte 20 und die Prallplatte 22 in einem definierten Abstand voneinander zu halten.

Bei der zeichnerisch dargestellten bevorzugten Ausführungsform ist die Lochplatte 20 mit Distanzelementen 60 versehen, welche zungenartig von der gemäß Figur 3A vorderen Seite der Lochplatte 20 abstehen, in der vormontierten Baugruppe gegen die gemäß Figur 4 linke Seite der Prallplatte 22 anliegen und vor allem ebenso wie die Verbindungselemente 54 eine Auflage für die Abscheideschicht 24 bilden. Außerdem gehen bei der dargestellten Ausführungsform die beiden Distanzelemente 60 in die beiden mittleren rippenförmigen Abstandshalteelemente 50 der Lochplatte 20 über.

Wie die Figuren 3A und 4, aber auch die Figur 1 erkennen lassen, sind die Lochplatte 20 und die Prallplatte 22 mit Fixierelementen für die Abscheideschicht 24, und zwar mit Fixierelementen in Form von Fixierstiften 62 und 64 versehen, welche an die Lochplatte 20 bzw. die Prallplatte 22 angeformt sind und beim Vormontieren der Baugruppe in die Abscheideschicht 24 eindringen und/oder die der Lochplatte bzw. der Prallplatte zugekehrte Seite der Abscheideschicht elastisch und/oder plastisch verformen.

In Folge der Fixierelemente kann sich die erfindungsgemäß nur eingelegte Abscheideschicht 24 nicht verschieben; die Fixierstifte 62 der Lochplatte 20 können aber auch als Abstandshalteelemente dienen, welche ein Anliegen der Abscheideschicht 24 an der Lochplatte 20 verhindern, so dass die rippenförmigen Abstandshalteelemente 50 der Lochplatte 20 nicht unbedingt erforderlich sind.

Schließlich weist die Lochplatte 20 zu ihrer Positionierung und Fixierung auf bzw. an dem Zwischenteil 12 und dem Unterteil 14 der Ventilhaube unten einen Fußbereich 66 auf, welcher einen ungefähr T-förmigen Querschnitt mit einer nach unten ragenden Verbindungsrippe 66a und zwei quer abstehenden Verbindungsrippen 66b besitzt. Wie sich der Figur 1 entnehmen lässt, dient die Verbindungsrippe 66a dem Verschweißen der Lochplatte 20 mit dem Unterteil 14, während die Verbindungsrippen 66b dem Verschweißen der Lochplatte 20 mit dem Zwischenteil 12 dienen.

Aus den Figuren 1, 2 und 3B ergibt sich schließlich, wie die vormontierte erfindungsgemäße Baugruppe in das Oberteil 10 der Ventilhaube von unten eingeschoben werden kann und in diesem Oberteil gehalten wird.

In Figur 2 sind die beiden Seitenwände 10b des Ventilhaubenoberteils 10 dargestellt, welche mindestens bereichsweise im Querabstand voneinander parallel zueinander verlaufen. Außerdem zeigt die Figur 2 die Stützwand 32, welche in die beiden Seitenwände 10b übergeht. Zum Einschieben der vormontierten erfindungsgemäßen Baugruppe aus Lochplatte 20, Prallplatte 22 und Abscheideschicht 24 in das Ventilhaubenoberteil 10 von unten sind an den Innenseiten der beiden Seitenwände 10b vertikal verlaufende Führungs- und Haltenuten 70 geformt, in welche sich die seitlichen Längsränder der Lochplatte 20 von unten passend einschieben lassen. Ferner ist die Unter- bzw. Innenseite der Decke 10a des Oberteils 10 mit einer Haltenut 72 versehen, in welche der obere Rand der Lochplatte 20 passend eingreift, nachdem die Lochplatte bis zum Anschlag gegen die Decke 10a in das Ventilhaubenoberteil 10 eingeschoben wurde.

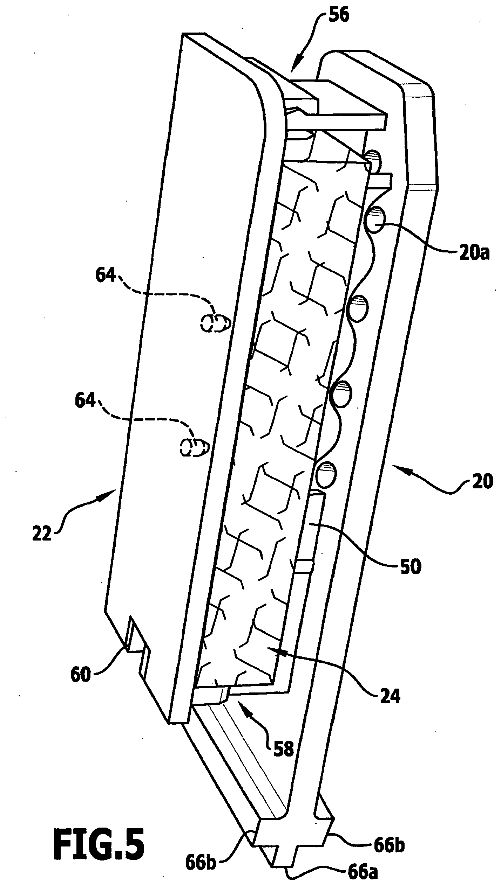

Die Figur 5 zeigt die aus Lochplatte 20, Prallplatte 22 und Abscheideschicht 24 bestehende erfindungsgemäße Baugruppe im vormontierten Zustand, in dem die beiden Platten aneinander verrastet sind.

Schließlich sind die beiden Seitenwände 10b des Ventilhaubenoberteils 10 auf ihren Innenseiten mit einander gegenüberliegenden und vertikal verlaufenden Haltenuten 80 versehen, in welche sich die zweite Prallplatte 18 von unten passend einschieben lässt und die der Halterung dieser Prallplatte dienen.

Wie besonders deutlich die Figur 2 erkennen lässt, bringen die rippenförmigen Abstandshalteelemente 50 auch den Vorteil mit sich, dass das durch die Löcher 20a der Lochplatte 20 in den Zwischenraum zwischen letzterer und der Prallplatte 22 einströmende Gas in diesem Zwischenraum auch dann noch einen definierten Bypass-Volumenstrom bilden und aus dem Zwischenraum ausströmen kann, wenn die Abscheideschicht 24 infolge einer im Betrieb erfolgten Verschmutzung mehr oder weniger gasundurchlässig geworden ist.

Schließlich soll an dieser Stelle noch einmal darauf hingewiesen werden, dass die Haltenuten 70 und 72 zusammen mit dem oberen Rand und den beiden seitlichen Rändern der Lochplatte 20 Labyrinthdichtungen bilden, welche zwar nicht absolut gasdicht sind, jedoch den Durchtritt nennenswerter Gasvolumina im Betrieb der Abscheidevorrichtung verhindern. Gleiches gilt für den Fußbereich 66 der Lochplatte 20 in Verbindung mit den sich aus Figur 1 ergebenden Querschnittskonturen des Zwischenteils 12 und des Unterteils 14, und zwar für den Fall, dass der Fußbereich 66 der Lochplatte 20 weder mit dem Zwischenteil 12, noch mit dem Unterteil 14 der Ventilhaube verschweißt wird.

## Patentansprüche

1. Abscheidevorrichtung zum Abscheiden von Flüssigkeits- oder FeststoffPartikeln aus einer Aerosol-Gasströmung, welche einen Impaktor (16) aufweist, der eine vom Aerosol anzuströmende Lochplatte (20) und eine planparallel zu Letzterer verlaufende, in Anströmrichtung im Abstand hinter der Lochplatte angeordnete Prallfläche besitzt, welche eine der Lochplatte zugekehrte Abscheideschicht (24) mit einer offenen Struktur aufweist,
wobei die Abscheidevorrichtung derart gestaltet ist, dass die Lochplatte (20) für das sie anströmende Aerosol eine eine Partikelabscheidung bewirkende Prallwand bildet sowie die Lochplatte (20) auf ihrer der Prallfläche zugewandten Seite mit mehreren, gegen den von der Aerosol-Strömung angeströmten Bereich der der Lochplatte zugewandten Seite der Abscheideschicht anliegenden Abstands-Halteelementen (50) versehen ist, wobei die in der Anströmrichtung gemessene Höhe der Abstands-Halteelemente, die von den Letzteren für die Abscheideschicht (24) gebildeten Auflageflächen sowie die Anzahl und Anordnung der Abstands-Halteelemente in Abhängigkeit vom Material der Abscheideschicht so gewählt sind, dass auch im Betrieb der Abscheidevorrichtung ein Freibleiben der Löcher (20a) der Lochplatte (20) von Material der Abscheideschicht gewährleistet ist, und wobei die Lochplatte auf ihrer der Abscheideschicht zugewandten Seite mit Abstands-Halteelemente bildenden Rippen versehen ist, zwischen welchen Löcher der Lochplatte angeordnet sind.

2. Abscheidevorrichtung nach Anspruch 1, **gekennzeichnet durch** eine ungefähr parallel zur Lochplatte (20) verlaufende, in Anströmrichtung im Abstand hinter der Lochplatte angeordnete und die Prallfläche bildende Prallplatte (22), deren der Lochplatte zugekehrte Seite die Abscheideschicht (24) aufweist.

3. Abscheidevorrichtung nach Anspruch 2, **dadurch gekennzeichnet, dass** die Lochplatte (20) und die Prallplatte (22) als getrennt voneinander hergestellte Teile ausgebildet und über Verbindungsmittel (52, 54, 56, 58) miteinander zu einer als Einheit einbaubaren Baugruppe (16) verbunden sind.

4. Abscheidevorrichtung nach Anspruch 3, **dadurch gekennzeichnet, dass** in der Baugruppe (16) die Abscheideschicht (24) zwischen der Lochplatte (20) und der Prallplatte (22) gehalten ist.

5. Abscheidevorrichtung nach einem der Ansprüche 1 bis 4, **dadurch gekennzeichnet, dass** die Abscheideschicht (24) eine zerklüftete Oberfläche aufweist.

6. Abscheidevorrichtung nach einem der Ansprüche 2 bis 5, **dadurch gekennzeichnet, dass** die Abscheideschicht (24) quer zur Prallplatte (22) kompressibel ist.

7. Abscheidevorrichtung nach einem der Ansprüche 2 bis 6, **dadurch gekennzeichnet, dass** die Abscheideschicht (24) eine als separates Teil hergestellte Auflage auf der Prallplatte (22) ist.

8. Abscheidevorrichtung nach einem der Ansprüche 1 bis 7, **dadurch gekennzeichnet, dass** die Abscheideschicht (24) ein Faservlies aufweist.

9. Abscheidevorrichtung nach einem der Ansprüche 1 bis 8, **dadurch gekennzeichnet, dass** mindestens ein Abstandshalteelement (50) als von der Lochplatte abstehender Stift, Dorn oder Steg ausgebildet ist.

10. Abscheidevorrichtung nach einem der Ansprüche 1 bis 9, **dadurch gekennzeichnet, dass** in einer Draufsicht auf die der Abscheideschicht (24) zugewandten Seite der Lochplatte (20) die Rippen (50) zwischen den Löchern (20a) wellenförmig gestaltet sind.

11. Abscheidevorrichtung nach einem der Ansprüche 1 bis 10, **dadurch gekennzeichnet, dass** die Abscheideschicht (24) durch die Abstands-halteelemente (50) in einem solchen Abstand von der Lochplatte (20) gehalten ist, dass sich zwischen der Letzteren und der Abscheideschicht Strömungspfade für die Gasströmung ergeben, welche ungefähr parallel zur Lochplatte verlaufen.

12. Abscheidevorrichtung nach Anspruch 11, **dadurch gekennzeichnet, dass** die Abscheideschicht (24) zwischen die Lochplatte (20) und die Prallfläche (22) eingelegt ist und der Impaktor (16) für die Abscheideschicht eine ein Verschieben der Letzteren in Durchströmrichtung der Strömungspfade (F3) verhindernde Abstützung (54, 58, 60) für einen Rand der Abscheideschicht aufweist, und dass die Abstützung in Durchströmrichtung der Strömungspfade gasdurchlässig ist.

13. Abscheidevorrichtung nach einem der Ansprüche 1 bis 12, **dadurch gekennzeichnet, dass** die Abscheideschicht (24) zwischen die Lochplatte (20) und die Prallfläche (22) eingelegt und die Lochplatte und/oder die Prallfläche mit mindestens einem Fixierelement (62) für die Abscheideschicht versehen ist.

14. Abscheidevorrichtung nach Anspruch 13, **dadurch gekennzeichnet, dass** das Fixierelement (62) als ein von der Lochplatte (20) oder der Prallfläche (22) abstehender und in die Abscheideschicht (24) eindringender Vorsprung gestaltet ist.

15. Abscheidevorrichtung nach einem der Ansprüche 1 bis 10, **dadurch gekennzeichnet, dass** die Abscheidevorrichtung für einen solchen Einbau gestaltet ist, dass sich die Lochplatte (20) und die Prallfläche (22) in vertikaler Richtung erstrecken oder mit der Vertikalen einen spitzen Winkel bilden.

16. Abscheidevorrichtung nach Anspruch 15, **dadurch gekennzeichnet, dass** die Lochplatte (20) die Prallfläche (22) nach unten überragt.

17. Abscheidevorrichtung nach einem der Ansprüche 3 bis 12, **dadurch gekennzeichnet, dass** die Verbindungsmittel (52, 54, 56, 58) als an den beiden Platten (20, 22) angeordnete Rastelemente gestaltet sind.

18. Abscheidevorrichtung nach einem der Ansprüche 2 bis 13, **dadurch gekennzeichnet, dass** an der Prallplatte (22) und/oder der Lochplatte (20) mindestens ein mit der anderen Platte zusammenwirkendes, die beiden Platten im Abstand voneinander haltendes Distanzelement (52, 54, 56, 58, 60) angeordnet ist.

19. Abscheidevorrichtung nach den Ansprüchen 3 und 18, **dadurch gekennzeichnet, dass** die Verbindungsmittel (52, 54, 56, 58) auch das Distanzelement bilden.

20. Abscheidevorrichtung nach einem der Ansprüche 3 bis 19, **dadurch gekennzeichnet, dass** die Verbindungsmittel (52, 54, 56, 58) so gestaltet sind, dass die Gasströmung des Aerosols aus dem Zwischenraum zwischen Lochplatte (20) und Abscheideschicht (24) ausströmen kann.

21. Abscheidevorrichtung nach einem der Ansprüche 1 bis 20, **dadurch gekennzeichnet, dass** die Lochplatte (20) in ihrem unteren Bereich mit einem Befestigungsabschnitt (66) versehen ist.

22. Abscheidevorrichtung nach einem der Ansprüche 2 bis 21, **dadurch gekennzeichnet, dass** die Lochplatte (20) und/oder die Prallplatte (22) seitliche Führungs- und Halteränder zum Einschieben der Baugruppe (16) in Führungen (70) eines Gehäuseteils (10) eines der Aufnahme der Abscheidevorrichtung dienenden Gehäuses (10, 14) aufweist.

23. Abscheidevorrichtung nach einem der Ansprüche 1 bis 22, **dadurch gekennzeichnet, dass** mindestens die Lochplatte (20) einen oberen Halterand zum Eingreifen zwischen Halteelemente (72) eines Gehäuseteils (10) eines der Aufnahme der Abscheidevorrichtung dienenden Gehäuses (10, 14) aufweist.

24. Abscheidevorrichtung nach einem der Ansprüche 1 bis 23, **dadurch gekennzeichnet, dass** mindestens die Lochplatte (20) einen unteren Halterand (66a) zum Eingreifen zwischen Halteelemente eines Gehäuseteits (12) eines der Aufnahme der Abscheidevorrichtung dienenden Gehäuses (10, 12, 14) aufweist.

25. Abscheidevorrichtung nach einem der Ansprüche 22 bis 24, **dadurch gekennzeichnet, dass** die Ränder der Lochplatte (20) und die mit diesen zusammenwirkenden Bereiche des Gehäuses (10, 12, 14) Labyrinthdichtungen bilden.

26. Abscheidevorrichtung nach einem der Ansprüche 2 bis 25, **dadurch gekennzeichnet, dass** die Lochplatte (20) und die Prallplatte (22) als Kunststoff-Spritzgussteile gestaltet sind.

27. Abscheidevorrichtung nach einem der Ansprüche 1 bis 26, **dadurch gekennzeichnet, dass** die Abscheidevorrichtung (16) in eine Ventilhaube (10, 12, 14) für einen Hubkolben-Verbrennungsmotor integriert und als Ölnebel-Abscheidevorrichtung gestaltet ist.

28. Abscheidevorrichtung nach Anspruch 27, **dadurch gekennzeichnet, dass** die Ventilhaube (10, 12, 14) ein oberes Gehäuseteil (10) aufweist, welches eine sich nach unten erstreckende und gegen den Impaktor (16) anliegende Stützwand (32) hält.

29. Abscheidevorrichtung nach Anspruch 28, **dadurch gekennzeichnet, dass** die Stützwand (32) gegen die Prallplatte (22) anliegt.

## Claims

1. Separating device for separating liquid or solid particles from an aerosol gas flow which comprises an impactor (16) that includes a perforated plate (20) onto which the aerosol is to flow and an impact surface which is spaced behind the perforated plate in the direction of flow and runs plane-parallel with the latter and which comprises a separation layer (24) having an open structure and facing the perforated plate,
wherein the configuration of the separating device is such that the perforated plate (20) for the aerosol flow that is incident thereon forms an impact wall which is effective to separate the particles and also that the perforated plate (20) is provided on the side thereof facing the impact surface with a plurality of spacer elements (50) which abut that region of the side of the separation layer facing the perforated plate onto which the aerosol flow is incident, wherein the height of the spacer elements measured in the direction of flow, the bearing surfaces formed by the spacer elements for the separation layer (24) as well as the number and the arrangement of the spacer elements are selected in dependence on the material of the separation layer in such a way as to ensure that the holes (20a) of the perforated plate (20) remain free of the material of the separation layer even when the separating device is in operation, and wherein the perforated plate, on its side facing the separation layer, is provided with ribs forming spacer elements, between which holes of the perforated plate are arranged.

2. A separating device in accordance with Claim 1, **characterized by** an impact plate (22) which runs approximately parallel to the perforated plate (20), is arranged at a spacing behind the perforated plate in the direction of flow and forms the impact surface, and wherein the side of the impact plate facing the perforated plate exhibits the separation layer (24).

3. A separating device in accordance with Claim 2, **characterized in that** the perforated plate (20) and the impact plate (22) are in the form of parts which are manufactured separately from each other and which are connected together by connecting means (52, 54, 56, 58) such as to form an assembly (16) that is installable as a unit.

4. A separating device in accordance with Claim 3, **characterized in that** the separation layer (24) is held between the perforated plate (20) and the impact plate (22) in the assembly (16).

5. A separating device in accordance with any of the Claims 1 to 4, **characterized in that** the separation layer (24) has a fissured surface.

6. A separating device in accordance with any of the Claims 2 to 5, **characterized in that** the separation layer (24) is compressible transverse to the impact plate (22).

7. A separating device in accordance with any of the Claims 2 to 6, **characterized in that** the separation layer (24) is an overlay on the impact plate (22) and is manufactured as a separate part.

8. A separating device in accordance with any of the Claims 1 to 7, **characterized in that** the separation layer (24) comprises a nonwoven fabric.

9. A separating device in accordance with any of the Claims 1 to 8, **characterized in that** at least one spacer element (50) is in the form of a pin, spike or ridge which protrudes from the perforated plate.

10. A separating device in accordance with any of the Claims 1 to 9, **characterized in that**, in a plan view of the side of the perforated plate (20) facing the separation layer (24), between the holes (20a) the ribs (50) are shaped in undulating manner.

11. A separating device in accordance with any of the Claims 1 to 10, **characterized in that** the separation layer (24) is held by the spacer elements (50) at a spacing from the perforated plate (20) which is such as to result in flow paths for the gas flow between said plate and the separation layer wherein said paths run approximately parallel to the perforated plate.

12. A separating device in accordance with Claim 11, **characterized in that** the separation layer (24) is inserted between the perforated plate (20) and the impact surface (22), and the impactor (16), for the separation layer, comprises a support (54, 58, 60) for an edge of the separation layer which prevents the latter from being displaced in the direction of through-flow of the flow paths (F₃), and **in that** the support is gas permeable in the direction of through-flow of the flow paths.

13. A separating device in accordance with any of the Claims 1 to 12, **characterized in that** the separation layer (24) is inserted between the perforated plate (20) and the impact surface (22), and the perforated plate and/or the impact surface is provided with at least one fixing element (62) for the separation layer.

14. A separating device in accordance with Claim 13, **characterized in that** the fixing element (62) is in the form of a projection which projects from the perforated plate (20) or the impact surface (22) and penetrates into the separation layer (24).

15. A separating device in accordance with any of the Claims 1 to 10, **characterized in that** the separating device is arranged for an installation which is such that the perforated plate (20) and the impact surface (22) extend in a vertical direction or form an acute angle with the vertical.

16. A separating device in accordance with Claim 15, **characterized in that** the perforated plate (20) projects beyond the impact surface (22) in the downward direction.

17. A separating device in accordance with any of the Claims 3 to 12, **characterized in that** the connecting means (52, 54, 56, 58) are in the form of latching elements that are arranged on the two plates (20, 22).

18. A separating device in accordance with any of the Claims 2 to 13, **characterized in that** at least one distancing element (52, 54, 56, 58, 60) is arranged on the impact plate (22) and/or on the perforated plate (20), which said distancing element cooperates with the other plate and holds the two plates spaced apart from one another.

19. A separating device in accordance with Claims 3 and 18, **characterized in that** the connecting means (52, 54, 56, 58) also form the distancing element.

20. A separating device in accordance with any of the Claims 3 to 19, **characterized in that** the connecting means (52, 54, 56, 58) are configured in such a manner that the gas flow of the aerosol can flow out of the gap between the perforated plate (20) and the separation layer (24).

21. A separating device in accordance with any of the Claims 1 to 20, **characterized in that** the perforated plate (20) is provided in the lower region thereof with an attachment section (66).

22. A separating device in accordance with any of the Claims 2 to 21, **characterized in that** the perforated plate (20) and/or the impact plate (22) comprises lateral guidance and retaining edges for sliding the assembly (16) into guides (70) of a housing part (10) of a housing (10, 14) which serves to accommodate the separating device.

23. A separating device in accordance with any of the Claims 1 to 22, **characterized in that** at least the perforated plate (20) comprises an upper retaining edge for engaging between holding elements (72) of a housing part (10) of a housing (10, 14) which serves to accommodate the separating device.

24. A separating device in accordance with any of the Claims 1 to 23, **characterized in that** at least the perforated plate (20) comprises a lower retaining edge (66a) for engaging between holding elements of a housing part (12) of a housing (10, 12, 14) which serves to accommodate the separating device.

25. A separating device in accordance with any of the Claims 22 to 24, **characterized in that** the edges of the perforated plate (20) and the regions of the housing (10, 12, 14) cooperating therewith form labyrinth seals.

26. A separating device in accordance with any of the Claims 2 to 25, **characterized in that** the perforated plate (20) and the impact plate (22) are in the form of injection moulded plastics parts.

27. A separating device in accordance with any of the Claims 1 to 26, **characterized in that** the separating device (16) is integrated into a valve cover (10, 12, 14) for a reciprocating piston internal combustion engine and is in the form of an oil mist separating device.

28. A separating device in accordance with Claim 27, **characterized in that** the valve cover (10, 12, 14) comprises an upper housing part (10) which holds a downwardly extending supporting wall (32) that abuts against the impactor (16).

29. A separating device in accordance with Claim 28, **characterized in that** the supporting wall (32) abuts against the impact plate (22).

## Revendications

1. Dispositif de séparation pour séparer des particules liquides ou solides d'un écoulement gazeux d'aérosol, lequel comprend un impacteur (16) possédant une plaque perforée (20) par laquelle afflue l'aérosol et une surface de déviation disposée dans le sens d'écoulement à distance derrière la plaque perforée et s'étendant parallèlement à cette dernière et laquelle présente une couche de séparation (24) dotée d'une structure ouverte et tournée vers la plaque perforée,
dans lequel la conception du dispositif de séparation est telle que la plaque perforée (20) forme pour l'aérosol s'écoulant par celle-ci une paroi de déviation provoquant une séparation de particules, et également que la plaque perforée (20) est pourvue, sur son côté tourné vers la surface de déviation, de plusieurs éléments d'écartement (50) reposant contre la zone recevant l'écoulement de l'aérosol du côté tourné vers la plaque perforée de la couche de séparation, dans lequel la hauteur des éléments d'écartement mesurée dans le sens d'écoulement, les surfaces d'appui formées par ces derniers pour la couche de séparation (24) ainsi que le nombre et la disposition des éléments d'écartement sont choisis en fonction du matériau de la couche de séparation de sorte que même en fonctionnement du dispositif de séparation, il soit garanti que les trous (20a) de la plaque perforée (20) restent exempts de matériau de la couche de séparation, et dans lequel la plaque perforée est pourvue, sur son côté tourné vers la couche de séparation, de nervures formant des éléments d'écartement, entre lesquelles sont disposés des trous de la plaque perforée.

2. Dispositif de séparation selon la revendication 1, **caractérisé par** une plaque de déviation (22) s'étendant à peu près parallèlement à la plaque perforée (20), et disposée dans le sens d'écoulement à distance derrière la plaque perforée (20), et formant la surface de déviation, dont le côté tourné vers la plaque perforée présente la couche de séparation (24).

3. Dispositif de séparation selon la revendication 2, **caractérisé en ce que** la plaque perforée (20) et la plaque de déviation (22) sont réalisées comme des pièces fabriquées séparément et sont reliées entre elles par des moyens de liaison (52, 54, 56, 58) pour former un ensemble (16) pouvant être monté comme une unité.

4. Dispositif de séparation selon la revendication 3, **caractérisé en ce que** la couche de séparation (24) est maintenue dans l'ensemble (16) entre la plaque perforée (20) et la plaque de déviation (22).

5. Dispositif de séparation selon l'une quelconque des revendications 1 à 4, **caractérisé en ce que** la couche de séparation (24) présente une surface fissurée.

6. Dispositif de séparation selon l'une quelconque des revendications 2 à 5, **caractérisé en ce que** la couche de séparation (24) est compressible transversalement à la plaque de déviation (22).

7. Dispositif de séparation selon l'une quelconque des revendications 2 à 6, **caractérisé en ce que** la couche de séparation (24) est un appui fabriqué comme une pièce séparée sur la plaque de déviation (22).

8. Dispositif de séparation selon l'une quelconque des revendications 1 à 7, **caractérisé en ce que** la couche de séparation (24) présente une étoffe non-tissée.

9. Dispositif de séparation selon l'une quelconque des revendications 1 à 8, **caractérisé en ce qu'**au moins un élément d'écartement (50) est réalisé comme une goupille, un goujon ou une nervure s'éloignant de la plaque perforée.

10. Dispositif de séparation selon l'une quelconque des revendications 1 à 9, **caractérisé en ce que** les nervures (50) entre les trous (20a) sont conçues de manière ondulée dans une vue en élévation du côté, tourné vers la couche de séparation (24), de la plaque perforée (20).

11. Dispositif de séparation selon l'une quelconque des revendications 1 à 10, **caractérisé en ce que** la couche de séparation (24) est maintenue par les éléments d'écartement (50) à une telle distance de la plaque perforée (20) qu'il en résulte des voies d'écoulement entre cette dernière et la couche de séparation pour l'écoulement gazeux, qui s'étendent à peu près parallèlement à la plaque perforée.

12. Dispositif de séparation selon la revendication 11, **caractérisé en ce que** la couche de séparation (24) est introduite entre la plaque perforée (20) et la surface de déviation (22), et l'impacteur (16), pour la couche de séparation, présente un appui (54, 58, 60) empêchant un déplacement de cette dernière dans le sens d'écoulement des voies d'écoulement (F₃) pour un bord de la couche de séparation, et **en ce que** l'appui est perméable au gaz dans le sens d'écoulement des voies d'écoulement.

13. Dispositif de séparation selon l'une quelconque des revendications 1 à 12, **caractérisé en ce que** la couche de séparation (24) est introduite entre la plaque perforée (20) et la surface de déviation (22), et la plaque perforée et/ou la surface de déviation est pourvue d'au moins un élément de fixation (62) pour la couche de séparation.

14. Dispositif de séparation selon la revendication 13, **caractérisé en ce que** l'élément de fixation (62) est conçu comme une saillie pénétrant dans la couche de séparation (24) et dépassant de la plaque perforée (20) ou de la surface de déviation (22).

15. Dispositif de séparation selon l'une quelconque des revendications 1 à 10, **caractérisé en ce que** le dispositif de séparation est conçu pour un tel montage de sorte que la plaque perforée (20) et la surface de déviation (22) s'étendent dans une direction verticale ou forment un angle aigu avec la verticale.

16. Dispositif de séparation selon la revendication 15, **caractérisé en ce que** la plaque perforée (20) dépasse de la surface de déviation (22) vers le bas.

17. Dispositif de séparation selon l'une quelconque des revendications 3 à 12, **caractérisé en ce que** les moyens de liaison (52, 54, 56, 58) sont conçus comme des éléments d'encliquetage disposés sur les deux plaques (20, 22).

18. Dispositif de séparation selon l'une quelconque des revendications 2 à 13, **caractérisé en ce qu'**au moins un élément d'écartement (52, 54, 56, 58, 60) est disposé sur la plaque de déviation (22) et/ou sur la plaque perforée (20), coagissant avec l'autre plaque, maintenant les deux plaques à distance l'une de l'autre.

19. Dispositif de séparation selon les revendications 3 et 18, **caractérisé en ce que** les moyens de liaison (52, 54, 56, 58) forment aussi l'élément d'écartement.

20. Dispositif de séparation selon l'une quelconque des revendications 3 à 19, **caractérisé en ce que** les moyens de liaison (52, 54, 56, 58) sont conçus de sorte que l'écoulement gazeux de l'aérosol puisse s'écouler de l'espace intermédiaire entre la plaque perforée (20) et la couche de séparation (24).

21. Dispositif de séparation selon l'une quelconque des revendications 1 à 20, **caractérisé en ce que** la plaque perforée (20) est pourvue dans sa zone inférieure d'une section de fixation (66).

22. Dispositif de séparation selon l'une quelconque des revendications 2 à 21, **caractérisé en ce que** la plaque perforée (20) et/ou la plaque de déviation (22) présente des bords de guidage et de maintien latéraux pour l'insertion de l'ensemble (16) dans des guidages (70) d'une partie (10) d'un boîtier (10, 14) servant au logement du dispositif de séparation.

23. Dispositif de séparation selon l'une quelconque des revendications 1 à 22, **caractérisé en ce qu'**au moins la plaque perforée (20) présente un bord de maintien supérieur pour l'engagement entre des éléments de maintien (72) d'une partie (10) d'un boîtier (10, 14) servant au logement du dispositif de séparation.

24. Dispositif de séparation selon l'une quelconque des revendications 1 à 23, **caractérisé en ce qu'**au moins la plaque perforée (20) présente un bord de maintien inférieur (66a) pour l'engagement entre des éléments de maintien d'une partie (12) d'un boîtier (10, 12, 14) servant au logement du dispositif de séparation.

25. Dispositif de séparation selon l'une quelconque des revendications 22 à 24, **caractérisé en ce que** les bords de la plaque perforée (20) et les zones du boîtier (10, 12, 14) coagissant avec ceux-ci forment des garnitures en labyrinthe.

26. Dispositif de séparation selon l'une quelconque des revendications 2 à 25, **caractérisé en ce que** la plaque perforée (20) et la plaque de déviation (22) sont conçues comme des parties moulées par injection de plastique.

27. Dispositif de séparation selon l'une quelconque des revendications 1 à 26, **caractérisé en ce que** le dispositif de séparation (16) est intégré dans un chapeau de soupape (10, 12, 14) pour un moteur à combustion à piston alternatif et est conçu comme un dispositif de séparation de pulvérisation d'huile.

28. Dispositif de séparation selon la revendication 27, **caractérisé en ce que** le chapeau de soupape (10, 12, 14) présente une partie de boîtier supérieure (10) qui maintient une paroi d'appui (32) reposant contre l'impacteur (16) et s'étendant vers le bas.

29. Dispositif de séparation selon la revendication 28, **caractérisé en ce que** la paroi d'appui (32) repose contre la plaque de déviation (22).
